# EUROPEAN PATENT SPECIFICATION

(11) **EP 1 245 439 B1**
(45) Date of publication and mention of the grant of the patent: **16.07.2003**
(21) Application number: 01901206.1
(22) Date of filing: 02.01.2001
(51) Int. Cl.: B60P 1/38, G01G 19/08

(54) **FODDER SUPPLY VEHICLE**
FAHRZEUG FÜR FUTTERMITTELVERSORGUNG
VEHICULE DE DISTRIBUTION D'ALIMENTS POUR ANIMAUX

(30) Priority: 03.01.2000 ES 200000005 U
(43) Date of publication of application: 02.10.2002
(73) Proprietor: Grupo Tatoma, S.L., 22400 Monzon (ES)
(72) Inventor: TORRES ASO, Fernando, E-22400 Monzón (ES)
(74) Representative: Schäfer, Matthias, Dipl.-Ing.
(86) International application number: ES0100002
(87) International publication number: WO01049523

(56) References cited:
- WO-A-97/09592
- WO-A-98/26647
- GB-A- 2 141 913
- US-A- 3 189 202
- US-A- 3 214 050
- US-A- 3 595 289
- US-A- 3 804 279
- US-A- 3 819 072
- US-A- 4 049 145
- US-A- 5 814 771

## Description

The present invention relates to a fodder supply vehicle according to the preamble of claim 1.

Currently, in order to deliver fodder for animals to agriculture and livestock farms, the fodder is usually placed in a vehicle fitted with a box or container, so that it can be delivered in bulk unloading it manually from the rear of the vehicle, or by means of a conveyor belt that stretches all along the bottom of the box, whose weight is controlled at the loading point. It is also very common to deliver fodder in packs, as well as in low to medium capacity containers, in which case the weight is controlled per unit.

The delivery of fodder in bulk to farms using a container vehicle has the disadvantage of requiring single deliveries, i.e. each order of fodder has to be taken from the supply plant to each farm one at a time because, logically, the weight is controlled at the starting point. This method results in a considerable waste of time that significantly increases the costs of the delivered product.

As for the delivery of fodder in low capacity packs or sacks, or in low to medium volume containers, it is important to stress that this delivery method also leads to higher costs of the final product, since the product has to be packed and later handled with pallets and auxiliary mechanisms both at the loading and at the unloading stage; this, as has already been said, means an important waste of time.

Closest priot art document US - A - 4,049,145 discloses a self-unloading agricultural wagon which carries an unloading assambly on it's front end. This wagon comprises a container which is emptied by means of two longitudinal conveyor belts and a transversal conveyer belt together with three transversal turnstiles.

Further, document WO 97/09592 discloses a trailer which is used for harvesting. The trailer is provided with means for sensing the weight of an accumulated payload while the vehicle is moving. Due to its use in a harvesting trailer the weighing sensors include means for filtering out the distortion caused by engine vibration of a pulling tractor and shocks caused by bumps in the road. WO 97/09592 seeks to solve the problem to produce a yield map. Besides the weighing sensors it also provides a global positioning system (GPS) in the tractor.

It is an object of the present invention to avoid the known problems of the prior art and to provide an improved solution in which the costs for delivering fodder to the respective client can be severely reduced.
This object is been solved by a fodder supply vehicle having the features of the characterising portion of claim 1. Advantageous embodiments are described in the dependent claims.

To work around these problems, a delivery vehicle to take fodder to agriculture and livestock farms has been devised. This vehicle is made up of a box or container placed on top of the chassis of an industrial vehicle or truck and it will be fitted with the necessary devices to deliver full or partial loads, providing the desired product weight at the unloading point.

The box or container, mainly of quadrangular or otherwise rectangular section, is placed on top of multiple weighing cells or sensors, which in turn are placed on top of the chassis or sidebars of the vehicle. Therefore, it is possible to provide the desired product weight at different points controlling the weight of each unloading operation with a control unit fitted in the driver's cab. The fodder or product is loaded from the top and it is unloaded through any of the openings available at the bottom of the rear ends of both sides of the vehicle, by means of a reversible conveyor belt, placed transversally at a level lower than the bottom of the box. Along the bottom of this box stretches another reversible conveyor belt which, in this case, is placed longitudinally, thus allowing the product that has not been unloaded and is placed at the rear end of the vehicle to be carried at will towards the approximate ideal gravity centre of the load. At least two turnstiles anchored transversally towards the rear end of the conveyor belt that act as the bottom of the box also take part in the product unloading operation. These turnstiles are placed one on top of the other leaving the appropriate gap between their pins.

The following is a brief explanation of how the advocated invention works. Once the fodder, or desired product, is loaded into the box and the vehicle has arrived at the unloading point, the side from which it is going to be unloaded is chosen, then the appropriate opening door is opened and the product carried by the transversal conveyor belt starts coming out; this conveyor belt receives the product from the longitudinally placed conveyor belt fitted at the bottom of the box; thus allowing the upper turnstiles, which, as is to be expected, turn in the opposite direction, to place the product correctly on top of the transversal unloading conveyor belt. If the vehicle is fully unloaded, the operation is finished, but if the vehicle is partially unloaded, after the desired amount is unloaded the direction of the bottom conveyor belt is reversed until the load is conveniently placed as much as possible towards the gravity centre of the vehicle.

As for the hydraulic circuit and its controls, their detailed description is deliberately omitted because they are not considered a relevant feature of the invention.

The present invention brings multiple advantages over the methods currently used to distribute products, like fodder to agriculture and livestock farms. The main advantage is the reduction of fodder handling costs, as well as transport costs for partial loads since, as mentioned before, this vehicle can carry out partial deliveries of one single load with a fully guaranteed product weight at each point.

To better understand the object of the present invention, a preferential practical realization of the same has been presented in the annexed plane. In this plane:
Figure -1- shows a lateral view of the present invention
Figure -2- shows a rear view of the invention.

The fodder supply vehicle which constitutes the present invention includes, as can be appreciated in the figures mentioned above, an industrial vehicle (1) with a quadrangular or otherwise rectangular box (2) of variable length fitted on top, and provided with multiple weighing sensors (5) between the bottom of the box (3) and the sidebars (4) of the vehicle chassis (1), as well as a longitudinally placed conveyor belt (6) fitted all along the upper side of the bottom (3) of the aforementioned box (2) and designed to roll forwards and backwards. At a level lower than this belt (6), at the rear end of the box there is another transversal conveyor belt (7) whose purpose is to receive the product carried by the first belt (6) and take it to any of the openings (8), as needed, through which the product comes out. The openings (8) are designed to be closed by means of other doors (9), they are activated individually by means of a hydraulic cylinder (10) each, and they are placed opposite the ends of the conveyor belt (7).

At the rear end of the box and on top of the final conveyor belt (6), there are at least two turnstiles (11) placed transversally across the box and conveniently separated; they are basically made up of a hollow cylindrical body (12) whose outside surface has been covered with pins (13) which consist of small pieces, mainly cylindrical, of a small diameter. The aforementioned turnstiles (11) are activated by two hydraulic engines (14) situated at one end of the turnstiles inside the box, in such a way that the engines (14) are inserted in one end of the hollow cylindrical body (12).

The hydraulic circuit can stop the conveyor belt (6) automatically if the turnstiles (11) get stuck for some reason; it is also possible to control the conveyor belts' (6) and (7) rolling speed, as well as the turnstiles (11) rotating speed.

For a proper control of the products supplied at any given time, the driver's cab is fitted with a weighing screen with printer (15).

As mentioned before, the detailed description of the hydraulic circuit features is deliberately omitted, because they are not considered to be relevant in the present invention, since they are components that belong to the current technology state.

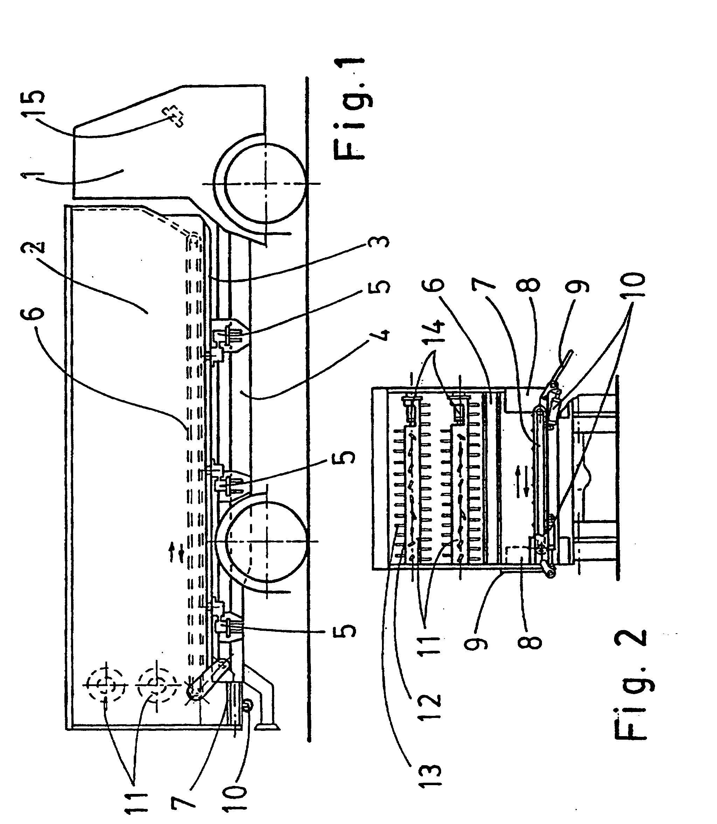

## Claims

1. Fodder supply vehicle of the type of those employed to supply or distribute fodder to agriculture and livestock farms consisting of an industrial vehicle (1) fitted with a quadrangular or otherwise rectangular box or container (2) placed on top of an industrial vehicle (1), the container (2) being emptied by means of a longitudinal conveyor belt (6) and a transversal conveyer belt (7) together with two transversal turnstiles (11)
**characterized in that**
the conveyer belt (7) and the turnstiles (11) are arranged in the container (2) towards its rear end; between the container (2) and the vehicle chassis (4) multiple weight sensors (5) are arranged allowing to see and record each weighing operation on a screen (15) located in the cab of the vehicle (1).

2. Fodder supply vehicle according to the previous claim,
**characterized in that**
at back of the sides of the container (2) and at the bottom there is an opening (8) fitted with a door (9) that is used to empty the product from one side, and both are opened and closed by an activating cylinder (10), preferably hydraulicaly.

3. Fodder supply vehicle according to one of the previous claims,
**characterized in that**
the conveyor belt (6) covers the whole of the bottom of the container (2), it can roll forwards and backwards and its speed in both longitudinal directions can be controlled.

4. Fodder supply vehicle according to the previous claims,
**characterized in that**
the conveyor belt (7) is located at a level lower than belt (6) and at its rear end, it is also located opposite the container side openings (8), it rolls with an adjustable linear speed towards either of the side openings (8).

5. Fodder supply vehicle according to the previous claims,
**characterized in that**
at the rear end of the container (2) and above the conveyor belt (6) there are two transversal turnstiles (11) placed at a distance from each other, they rotate in the opposite direction and are made up of a hollow cylindrical body whose exterior surface is covered with multiple pins (13) consisting of small metal elements, and they are activated by two hydraulic engines inserted in the ends of the hollow cylindrical bodies (12) located inside the box.

## Patentansprüche

1. Fahrzeug zur Futtermittelversorgung von der Art, die zur Versorgung oder Verteilung von Futter auf Agrar- und Viehhaltungsfarmen, bestehend aus einem Industriefahrzeug (1), das mit einer quadratischen oder andersartig rechteckigen Kasten oder Container (2), der auf der Oberseite des Industriefahrzeugs (1) plaziert ist, ausgestattet ist, wobei der Container (2) durch ein längliches Förderband (6) und ein diagonales Förderband (7) zusammen mit zwei transversalen Drehkreuzen (11) entladen wird,
**dadurch gekennzeichnet, dass**
das Förderband (7) und die Drehkreuze (11) in dem Container (2) in Richtung des rückwertigen Endes angeordnet sind; dass zwischen dem Container (2) und dem Fahrzeug Chassis (4) mehrere Gewichtssensoren (5) angeordnet sind, die es ermöglichen jede Wiegeoperation auf einen Bildschirm (15), der in der Kabine des Fahrzugs (1) angeordnet ist, zu sehen und aufzuzeichnen.

2. Fahrzeug zur Futtermittelversorgung gemäß dem vorangehenden Patentanspruch,
**dadurch gekennzeichnet, dass**
auf der Rückseite der Seiten des Containers (2) und an der Unterseite eine mit einer Tür (9) ausgestattete Öffnung (8) vorhanden ist, die verwendet wird, um das Produkt von einer Seite zu entleeren, und beide werden durch einen Betätigungszylinder (10), vorzugsweise hydraulisch geöffnet und geschlossen.

3. Fahrzeug zur Futtermittelversorgung nach einem der vorangehenden Patentansprüche,
**dadurch gekennzeichnet, dass**
das Förderband (6) den gesamten Boden des Containers (2) bedeckt, dass es vorwärts und rückwärts rollen kann, und dass seine Geschwindigkeit in beide Längsrichtungen geregelt werden kann.

4. Fahrzeug zur Futtermittelversorgung nach einem der vorangehenden Patentansprüche,
**dadurch gekennzeichnet, dass**
das Förderband (7) auf einem niedrigeren Niveau angeordnet ist, als das Band (6), und dass es an seinem rückwärtigen Ende ferner gegenüber den Containerseitenöffhungen (8) angeordnet ist, und dass es mit einer einstellbaren linearen Geschwindigkeit in Richtung einer der Seitenöffhungen (8) rollt.

5. Fahrzeug zur Futtermittelversorgung nach einem der vorangehenden Patentansprüche,
**dadurch gekennzeichnet, dass**
an dem rückwärtigen Ende des Containers (2) und über dem Förderband (6) zwei transversale Drehkreuze (11) in einem Abstand voneinander angeordnet sind, wobei diese sich in entgegengesetzter Richtung drehen und aus einem hohlzylindrischen Körper hergestellt sind, dessen äußere Oberfläche mit mehreren Stiften (13), die aus kleinen Metallelementen bestehen, bedeckt ist, und dass sie durch zwei hydraulische Motoren aktiviert sind, die in den Enden der hohlzylindrischen Körper (12) in dem Kasten angeordnet sind.

## Revendications

1. Un véhicule d'approvisionnement en fourrage du type de ceux utilisés pour approvisionner et distribuer du fourrage dans les fermes agricoles ou d'élevage et qui consiste en un véhicule industriel (1) comportant une boîte ou un container quadrangulaire ou rectangulaire (2) placé sur le dessus d'un véhicule industriel (1), le container (2) étant vidé grâce à un convoyeur longitudinal (6) et un convoyeur transversal (7) ainsi que grâce à deux tourniquets (11),
**caractérisé en ce que**
le convoyeur (7) et les tourniquets (11) sont placés dans le container (2), à l'arrière ; entre le container (2) et le châssis du véhicule (4) sont placés de multiples détecteurs de poids (5), permettant de voir et d'enregistrer chaque pesée sur un écran (15) situé dans la cabine du véhicule (1).

2. Un véhicule d'approvisionnement en fourrage selon la revendication précédente,
**caractérisé en ce que**
à l'arrière des côtés du container (2) et au fond, il y a des ouvertures (8) comportant une porte (9) qui sont utilisées pour vider le contenu par un côté, et qui sont ouvertes et fermées par l'activation d'un cylindre (10) de préférence hydraulique.

3. Un véhicule d'approvisionnement en fourrage selon l'une des revendications précédentes,
**caractérisé en ce que**
le convoyeur (6) recouvre la totalité du fond du container (2) et qu'il peut rouler en avant et en arrière, et que sa vitesse peut être contrôlée dans les deux directions longitudinales.

4. Un véhicule d'approvisionnement en fourrage selon les revendications précédentes,
**caractérisé en ce que**
le convoyeur (7) est situé en dessous et à l'arrière du convoyeur (6), et à l'opposé des ouvertures latérales du container (8) et qu'il roule à une vitesse linéaire ajustable, en direction de l'une ou l'autre des ouvertures latérales (8).

5. Un véhicule d'approvisionnement en fourrage selon les revendications précédentes,
**caractérisé en ce que**
à l'arrière du container (2) et au dessus du convoyeur (6) il y a deux tourniquets transversaux (11) placés à une certaine distance l'un de l'autre, qui pivotent en sens inverse et sont constitués d'un cylindre creux dont la surface extérieure est recouverte de nombreux pics (13) faits de petits éléments de métal et qui sont activés par deux moteurs hydrauliques insérés aux extrémités des cylindres creux (12) à l'intérieur du container.
